# EUROPEAN PATENT APPLICATION

(11) **EP 4 711 347 A1**
(43) Date of publication of application: **18.03.2026**
(21) Application number: 23942180.3
(22) Date of filing: 12.12.2023
(51) Int. Cl.: C04B 22/08

(54) **CORROSION-RESISTANT MATERIAL FOR CEMENT SLURRY, CARBON DIOXIDE CORROSION RESISTANT CEMENT SLURRY, PREPARATION METHOD, AND USE**

(30) Priority: 21.06.2023 CN 202310740303
(71) Applicant: China National Petroleum Corporation, Beijing 100007 (CN); CNPC Engineering Technology R&D Company Limited, Beijing 102206 (CN)
(72) Inventor: ZHANG, Chi, Beijing 102206 (CN); ZHANG, Xiaobing, Beijing 102206 (CN); JIN, Jianzhou, Beijing 102206 (CN); YU, Yongjin, Beijing 102206 (CN); QU, Congfeng, Beijing 102206 (CN); ZHANG, Hua, Beijing 102206 (CN); QI, Fengzhong, Beijing 102206 (CN); LIU, Huiting, Beijing 102206 (CN); XIA, Xiujian, Beijing 102206 (CN); ZHANG, Jiaying, Beijing 102206 (CN); ZHAI, Xianzhi, Beijing 102206 (CN)
(74) Representative: Meissner Bolte Partnerschaft mbB
(86) International application number: PCT/CN2023/138201
(87) International publication number: WO 2024/259914

(57) **Abstract**

A corrosion-resistant material for a cement slurry, a carbon dioxide corrosion resistant cement slurry, a preparation method, and a use. The corrosion-resistant material comprises a mixture A and a mixture B, wherein the mixture A comprises activated carbon, nanosilicon dioxide, and nano-alumina; the mixture B comprises a component C and a component D; the component C is selected from diatomite and/or fly ash; and the component D is selected from one or more of metakaolin, pumice, and coal gangue. The carbon dioxide corrosion resistant cement slurry made of the corrosion-resistant material has good corrosion resistance in a CO₂ corrosion environment; the cement stone before corrosion has a high compressive strength and a compact structure; and the cement stone after corrosion has good comprehensive properties, for example, has no obvious decrease in compressive strength, small permeability, good mechanical properties, good settling stability, and good rheology, such that the cementing quality of a CCUS well is guaranteed, and efficient storage of CO₂ is achieved.

## Description

### CROSS-REFERENCE TO RELATED APPLICATIONS

The application claims the benefit of the Chinese patent application No. "202310740303.6", filed on June 21, 2023, the content of which is specifically and entirely incorporated herein by reference.

### TECHNICAL FIELD

The present disclosure relates to the technical field of oil and gas well cement slurry, in particular to a corrosion-resistant material for a cement slurry, a carbon dioxide corrosion-resistant cement slurry, and a preparation method therefor and a use thereof.

### BACKGROUND

Carbon Capture, Utilization and Storage (CCUS) is currently the only viable technology capable of substantially reducing CO₂ emissions, and the integrity of the cement sheath for well cementation is the key technology to determine whether the CO₂ geological storage projects can be smoothly implemented and ultimately achieve long-term storage. It is well-known that CO₂ exists underground in a supercritical state, with characteristics such as low viscosity and high permeability. At the same time, Portland cement systems exhibit strong alkalinity, while CO₂ is an acid gas. Under long-term erosion of CO₂, the cement sheath for well cementation is highly susceptible to excessive carbonization and calcium removal, leading to changes in composition, strength attenuation, an increase in porosity and permeability, thereby compromising the overall structure of the cement sheath, threatening the long-term and effective sealing of the wellbore.

Currently, corrosion-resistant cement slurry systems are widely applied both domestically and internationally in response to the corrosion problem of cement sheath by acid gases such as CO₂. CO₂ corrosion resistant materials for oil well cement are mainly composed of ultra-fine inert materials and active siliceous materials. For instance, Sinopec's Dezhou Research Institute incorporated inert ultra-fine barite, while researchers such as Guan-Ying Li from National Cheng Kung University in Taiwan utilized active materials like fly ash and silica powder. These materials reduce the permeability of cement stone through the physical close-packing effect (PCPE) and reduce the alkalinity of the cement stone through reacting with cement minerals to enhance the carbon dioxide corrosion resistance. Such a method merely mitigates the exchange source of the dissolution ions to retard the infiltration rate of the CO₂-corrosive medium as far as possible. Once the corrosive medium has penetrated the internal structure of the cement stone, it will continue to damage the gel structure, and the method can no longer exert its corrosion-resistant effect. Therefore, the corrosion resistance remains less than ideal.

CN114133172A discloses a carbon dioxide corrosion-resistant cement slurry for well cementation and a preparation method thereof. The carbon dioxide corrosion-resistant cement slurry is prepared from Portland cement, nanosilica, UF cellulose fiber, a fluid loss additive, a dispersant, and water. The nanosilica exerts a pore-filling and blocking effect on the internal micropores of set cement and participates in the hydration reaction, increasing the Si/Ca ratio of the hydration product and thereby improving its corrosion resistance. UF cellulose fiber improves the mechanical properties of the set cement. However, the applicable temperature range for the UF cellulose fiber is not provided. The examples use 60°C, indicating a limited range and insufficient system flexibility.

Therefore, it is urgently required to develop a cement slurry with desirable corrosion resistance in a CO₂ corrosive environment to ensure cementing quality in CCUS wells and achieve efficient CO₂ storage.

### SUMMARY

The present disclosure aims to overcome the defects in the conventional technology that the cement stone cannot maintain sustainable corrosion resistance after invasion by a CO₂-corrosive medium, and provides a corrosion-resistant material for a cement slurry, a carbon dioxide corrosion-resistant cement slurry, a preparation method therefor, and a use thereof. After the carbon dioxide corrosion-resistant cement slurry prepared with the corrosion-resistant material of the present disclosure is corroded under the corrosion conditions of a CO₂ geological storage well, the cement stone has characteristics such as high compressive strength, low permeability, good sedimentation stability, good rheology, and a wide applicable temperature range, thereby ensuring long-term effective sealing performance of the CO₂ storage well.

In order to achieve the above objects, a first aspect of the present disclosure provides a corrosion-resistant material for a cement slurry, including a mixture A and a mixture B; where the mixture A includes activated carbon, nanosilica, and nano-alumina; the mixture B includes a component C and a component D; the component C is selected from diatomite and/or fly ash, and the component D is selected from the group consisting of metakaolin, pumice, and coal gangue.

Preferably, a mass ratio of activated carbon, nanosilica, and nano-alumina in the mixture A is 1:(0.05-0.1): (0.05-0.1).

Preferably, a mass ratio of the component C to the component D is 1-2: 1.

Preferably, a mass ratio of the mixture A to the mixture B is 1: 2-4.

Preferably, the activated carbon has an average particle diameter of 40-60µm.

Preferably, the nanosilica has a SiO₂ content of more than 99% and an average particle diameter of 30-40nm.

Preferably, the nano-alumina has an Al₂O₃ content of more than 99% and an average particle diameter of 10-30nm.

Preferably, the component C has an average particle diameter of 10-20µm.

Preferably, the component D has an average particle diameter of 20-40µm.

A second aspect of the present disclosure provides a method for preparing the corrosion-resistant material for a cement slurry, including:
mixing activated carbon, nanosilica, and nano-alumina to obtain a mixture A;
mixing a component C and a component D to obtain a mixture B, where the component C is selected from diatomite and/or fly ash, and the component D is selected from the group consisting of metakaolin, pumice, and coal gangue; and
mixing the mixture A and the mixture B under the condition of a low stirring speed, followed by a high stirring speed to obtain the corrosion-resistant material.

Preferably, the low stirring speed is 3,800-4,200 r/min, and the high stirring speed is 11,500-12,500 r/min.

A third aspect of the present disclosure provides a use of the corrosion-resistant material according to the aforementioned first aspect or of the corrosion-resistant material prepared by the method according to the aforementioned second aspect in a cement slurry, preferably in a carbon dioxide corrosion-resistant cement slurry.

A fourth aspect the present disclosure provides a carbon dioxide corrosion-resistant cement slurry, including following components in parts by weight: 100 parts of Grade G oil well cement, 2-6 parts of a corrosion-resistant material, 2-5 parts of micro-silicon, 3-6 parts of a reinforcing material, 3-5 parts of an expansion toughening material, 1-3 parts of latex powder, 0-2 parts of a stabilizer, 0.3-2 parts of a dispersant, 2-5 parts of a fluid loss additive, 0.1-2 parts of a retarder, 0.2-0.5 part of a defoamer, and 48-56 parts of water; where the corrosion-resistant material is the corrosion-resistant material according to the aforementioned first aspect or the corrosion-resistant material prepared by the method according to the aforementioned second aspect.

A fifth aspect of the present disclosure provides a method for preparing a carbon dioxide corrosion-resistant cement slurry, including :
mixing a Grade G oil well cement with a corrosion-resistant material, micro-silicon, a reinforcing material, an expansion toughening material, latex powder, a stabilizer, and a dispersant to obtain a dry mix;
mixing a fluid loss addictive, a retarder, a defoamer, and water to obtain a wet mix; and
mixing the dry mix with the wet mix to obtain a carbon dioxide corrosion-resistant cement slurry.

A sixth aspect of the present disclosure provides a use of the carbon dioxide corrosion-resistant cement slurry according to the aforementioned fourth aspect or of the carbon dioxide corrosion-resistant cement slurry prepared by the method according to the aforementioned fifth aspect in oil and gas well cementation.

Preferably, the carbon dioxide corrosion-resistant cement slurry has a use temperature of 30-150°C.

Based on the technical scheme, the beneficial technical effects achieved by the present disclosure are as follows.
(1) The cement slurry prepared with a corrosion-resistant material for a cement slurry provided by the present disclosure has an applicable temperature of 30-150°C, and the cement stone after corrosion has a compressive strength more than 20MPa and a permeability less than 0.1mD, or even less than 0.05mD, significantly improving the carbon dioxide corrosion resistance of the set cement with no adverse effects on other engineering properties of the cement slurry, thereby ensuring long-term effective sealing of the cement sheath under CCUS corrosive conditions.
(2) The carbon dioxide corrosion-resistant cement slurry of the present disclosure exhibits good corrosion resistance in a CO₂ corrosion environment. The cement stone before corrosion has high compressive strength and a compact structure; and the cement stone after corrosion exhibits no significant attenuation in compressive strength, low permeability, good mechanical properties, good sedimentation stability, and good rheology, applicable to a carbon dioxide corrosion-resistant cement slurry system with a temperature of 30-150°C and below, ensuring the cementing quality of a CCUS well, and long-term effective sealing performance of the cement sheath and an efficient carbon dioxide storage under a CCUS corrosive condition

### DESCRIPTION OF THE EMBODIMENTS

The terminals and any value of the ranges disclosed herein are not limited to the precise ranges or values; such ranges or values shall be comprehended as including the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

A first aspect the present disclosure provides a corrosion-resistant material for a cement slurry, including a mixture A and a mixture B; where the mixture A includes activated carbon, nanosilica, and nano-alumina; the mixture B includes a component C and a component D; the component C is selected from diatomite and/or fly ash; and the component D is selected from the group consisting of metakaolin, pumice, and coal gangue.

In the present disclosure, the mixture A includes activated carbon, nanosilica, and nano-alumina, where the nanosilica and nano-alumina are adsorbed in the pores and channels of activated carbon, and may be slowly released for durable repair. The mixture A mainly functions at a later stage.

In the present disclosure, after the cement stone contacts with carbon dioxide, the mixture B has a strong pozzolanic activity, it initially carries out the pozzolanic reaction, consumes Ca(OH)₂ in the cement stone, and generates dense substances such as calcium silicate hydrate and calcium alumino-hydrate, which are attached outside the cement stone to perform the protective function and prevent CO₂ from permeating deeper into the cement stone, that is, initial formation of a protective film at the outside of the cement stone is carried out. As the hydration reaction proceeds, the hydration products (calcium silicate hydrate, calcium alumino-hydrate, and the like) are continuously consumed, the protective film is destroyed, and the microstructure of the cement stone again shows signs of destruction. The mixture A slowly releases nanosilica and nano-alumina contained therein, which are used for filling and plugging, forming a dense protective film on the outside of the cement stone. In addition, the nanosilica reacts with Ca(OH)₂ in the cement stone, which prevents the acid gas from permeating further into the cement stone, that is, the mixture A can play a role of reinforcing and thickening the protective film at the peripheral of the cement stone, thus achieving the long-term and effective corrosion protection of the cement stone. The present disclosure achieves long-term corrosion protection by optimizing the formulation of corrosion-resistant material, making long-term corrosion prevention effective.

The present disclosure has the advantages of easy, convenient operation and high practicality by mixing the mixture A and the mixture B.

In some embodiments of the present disclosure, the mass ratio of activated carbon to nanosilica to nano-alumina in the mixture A is 1:0.05-0.1:0.05-0.1.

In some embodiments of the present disclosure, the mass ratio of the component C to the component D is 1-2: 1.

In some embodiments of the present disclosure, the mass ratio of the mixture A to the mixture B is 1: 2-4.

The carbon dioxide corrosion-resistant cement slurry made of the above components exhibits good corrosion resistance in a CO₂ corrosion environment, the cement stone before corrosion exhibits high compressive strength and a compact structure, and the cement stone after corrosion exhibits no significant attenuation in compressive strength (the attenuation rate of the strength is less than 20%), and a permeability less than 0.1mD, or even less than 0.05mD.

The cement slurry including the aforementioned corrosion-resistant material has an applicable temperature of 30-150°C, significantly improving the CO₂ corrosion resistance of the cement stone, the corroded cement stone has a compressive strength more than 20MPa, a low permeability, with no adverse effect on other engineering properties of the cement stone, ensuring long-term and effective sealing properties of the cement sheath under a CCUS corrosive condition.

In some embodiments of the present disclosure, the activated carbon has an average particle diameter of 40-60µm.

In some embodiments of the present disclosure, the nanosilica has a SiO₂ content of more than 99% and an average particle diameter of 30-40nm.

In some embodiments of the present disclosure, the nano-alumina has an Al₂O₃ content of more than 99% and an average particle diameter of 10-30nm.

In some embodiments of the present disclosure, the component C has an average particle diameter of 10-20µm.

In some embodiments of the present disclosure, the component D has an average particle diameter of 20-40µm.

A second aspect of the present disclosure provides a method for preparing a corrosion-resistant material for a cement slurry, including:
mixing activated carbon, nanosilica, and nano-alumina to obtain a mixture A;
mixing a component C and a component D to obtain a mixture B, where the component C is selected from diatomite and/or fly ash, and the component D is selected from the group consisting of metakaolin, pumice, and coal gangue; and
mixing the mixture A and the mixture B under the condition of low stirring speed, followed by a high stirring speed to obtain the corrosion-resistant material.

In some embodiments of the present disclosure, the low stirring speed is 3,800-4,200 r/min, and the high stirring speed is 11,500-12,500 r/min.

In some embodiments of the present disclosure, a mass ratio of activated carbon, nanosilica, and nano-alumina in the mixture A is 1:(0.05-0.1): (0.05-0.1).

In some embodiments of the present disclosure, a mass ratio of the component C to the component D is 1-2: 1.

In some embodiments of the present disclosure, a mass ratio of the mixture A to the mixture B is 1: 2-4.

In some embodiments of the present disclosure, the activated carbon has an average particle diameter of 40-60µm.

In some embodiments of the present disclosure, the nanosilica has a SiO₂ content of more than 99% and an average particle diameter of 30-40nm.

In some embodiments of the present disclosure, the nano-alumina has an Al₂O₃ content of more than 99% and an average particle diameter of 10-30nm.

In some embodiments of the present disclosure, the component C has an average particle diameter of 10-20µm.

In some embodiments of the present disclosure, the component D has an average particle diameter of 20-40µm.

A third aspect of the present disclosure provides a use of the corrosion-resistant material according to the aforementioned first aspect or of the corrosion-resistant material prepared by the method according to the aforementioned second aspect in a cement slurry, preferably in a carbon dioxide corrosion-resistant cement slurry.

The process of using the corrosion-resistant material in the present disclosure for preparing the carbon dioxide corrosion-resistant cement slurry can be easily and conveniently implemented. After the cement stone contacts with carbon dioxide, the mixture B carries out a pozzolanic reaction, and consumes Ca(OH)₂ in the cement stone, and generates dense substances such as calcium silicate hydrate and calcium alumino-hydrate, preventing the cement stone from corrosion of carbon dioxide, and initially forming a protective film. As the hydration reaction proceeds, the hydration products are continuously consumed, the microstructure of the cement stone again shows signs of destruction. In the meanwhile, the mixture A slowly releases nanosilica and nano-alumina contained therein, which are used for filling and plugging, and forming a dense protective film on the outside of the cement stone. In addition, the nanosilica continuously reacts with Ca(OH)₂ in the cement stone, and prevents the acid gas from permeating further into the cement stone. Therefore, the prepared cement slurry exhibits sustainable resistance to carbon dioxide corrosion.

A fourth aspect the present disclosure provides a carbon dioxide corrosion-resistant cement slurry, including following components in parts by weight: 100 parts of Grade G oil well cement, 2-6 parts of a corrosion-resistant material, 2-5 parts of micro-silicon, 3-6 parts of a reinforcing material, 3-5 parts of an expansion toughening material, 1-3 parts of latex powder, 0-2 parts of a stabilizer, 0.3-2 parts of a dispersant, 2-5 parts of a fluid loss additive, 0.1-2 parts of a retarder, 0.2-0.5 part of a defoamer, and 48-56 parts of water; where the corrosion-resistant material is the corrosion-resistant material according to the aforementioned first aspect or the corrosion-resistant material prepared by the method according to the aforementioned second aspect.

In the present disclosure, the carbon dioxide corrosion-resistant cement slurry made of the components exhibits good corrosion resistance in a CO₂ corrosion environment. The cement stone before corrosion exhibits high compressive strength and a compact structure; and the cement stone after corrosion has good comprehensive properties, for example, has no obvious decrease in compressive strength, small permeability, desirable mechanical properties, good settling stability, and excellent rheology, such that the cement slurry can be used in the CO₂ corrosion resistant cement slurry system with an applicable temperature of 30-150°C and below, ensuring the cementing quality of a CCUS well, achieving the efficient storage of CO₂.

In some embodiments of the present disclosure, the micro-silicon has a SiO₂ content of no less than 90%, an average particle diameter of 5-10µm, and a 45µm sieve residue of less than or equal to 5%.

In the present disclosure, the reinforcing material is selected from the group consisting of reinforcing materials in oil well cements for well cementation.

In some embodiments of the present disclosure, the reinforcing material is selected from inorganic mineral powder material, preferably mineral powder DRB-1S produced by the CNPC Engineering Technology R&D Company Limited.

In the present disclosure, the expansion toughening material is selected from expansion toughening material in oil well cements for well cementation.

In some embodiments of the present disclosure, the expansion toughening material is selected from rubber material, preferably rubber DRE-3S.

In the present disclosure, the latex powder is selected from the group consisting of latex powder in oil well cement for well cementation.

In some embodiments of the present disclosure, the latex powder is selected from polymer, preferably polymer DRT-1S.

In the present disclosure, the stabilizer is selected from stabilizing agent in oil well cement for well cementation.

In some embodiments of the present disclosure, the stabilizer is selected from attapulgite material, preferably mineral powder DRK-2S.

In some embodiments of the present disclosure, the dispersant is selected from polystyrene sulphonate compound and/or polycondensate of formaldehyde and acetone.

In some embodiments of the present disclosure, the fluid loss additive is selected from polyacrylamide compound.

In some embodiments of the present disclosure, the retarder is selected from acrylamide compound.

In some embodiments of the present disclosure, the defoamer is selected from the group consisting of tributyl phosphate, polyoxypropylene glycerol, and polydimethylsiloxane.

The fifth aspect of the present disclosure provides a method for preparing a carbon dioxide corrosion-resistant cement slurry, including the following steps:
mixing a Grade G oil well cement with a corrosion-resistant material, micro-silicon, a reinforcing material, an expansion toughening material, latex powder, a stabilizer, and a dispersant to obtain a dry mix;
mixing a fluid loss additive, a retarder, a defoamer, and water to obtain a wet mix; and
mixing the dry mix with the wet mix to obtain a carbon dioxide corrosion-resistant cement slurry.

The Grade G oil well cement, corrosion-resistant material, micro-silicon, reinforcing material, expansion toughening material, latex powder, stabilizer, dispersant, fluid loss additive, retarder, and defoamer mentioned above are identical to those in the fourth aspect. As for the specific details, please refer to the preceding description; the details will not be repeatedly described herein.

The sixth aspect of the present disclosure provides a use of the carbon dioxide corrosion-resistant cement slurry according to the aforementioned fourth aspect or of the carbon dioxide corrosion-resistant cement slurry prepared by the method according to the aforementioned fifth aspect in oil and gas well cementation.

In some embodiments of the present disclosure, the carbon dioxide corrosion-resistant cement slurry has a use temperature of 30-150°C.

According to a particularly preferred embodiment of the present disclosure, the method for preparing the carbon dioxide corrosion-resistant cement slurry specifically includes:
(1) preparation of a corrosion-resistant material: mixing activated carbon, nanosilica, and nano-alumina sufficiently and uniformly in a mass ratio of 1:(0.05-0.1):(0.05-0.1) to obtain a mixture A; mixing at least one of diatomite or fly ash uniformly and at least one of metakaloline, pumice or coal gangue uniformly in a mass ratio of (1-2):1 to obtain a mixture B; and mixing the mixture A and mixture B uniformly in a mass ratio of 1:(2-4) to obtain a corrosion-resistant material; and
(2) weighting an oil well cement, a corrosion-resistant material, micro-silicon, a reinforcing material, an expansion toughening material, latex powder, a stabilizer and a dispersant according to the formulation and mixing the materials uniformly to obtain a dry mix; weighting a fluid loss additive, a retarder, and a defoamer according to the formulation and mixing the materials uniformly to obtain a wet mix; pouring the dry mix uniformly into the wet mix at a stirring speed of 4,000±200 r/min; after the dry mix is completely added into the wet mix, a stirring cup lid is covered on the materials; the stirring speed is adjusted to 12,000±500 r/min, and the stirring is continued for 30-40s, preferably 35s, to obtain a carbon dioxide corrosion-resistant cement slurry.

The present disclosure will be described in detail below with reference to examples.

If the specific conditions are not indicated in the following examples and comparative examples, the reactions are performed according to the conventional conditions or the conditions suggested by the manufacturers. If the manufacturers of the reagent or instrument are not specified, both the reagent and the instrument pertain to the commercially available conventional products.

The Grade G oil well cement was High Sulfate Resistance (HSR) Grade G oil well cement, manufactured by the Dalian Cement Group Co., Ltd.

The micro-silicon had a SiO₂ content of 95%, an average particle diameter of 8µm, and a 45µm sieve residue of 4.29%.

The reinforcing material was the mineral powder DRB-1S, a reinforcing material in oil well cements for well cementation, manufactured by the CNPC Engineering Technology R&D Company Limited.

The expansion toughening material was the rubber DRE-3S, an expansion toughening material in oil well cements for well cementation, manufactured by the CNPC Engineering Technology R&D Company Limited.

The latex powder was the polymer DRT-1S, a latex powder in oil well cements for well cementation, manufactured by the CNPC Engineering Technology R&D Company Limited.

The stabilizer was mineral powder DRK-2S, a high-temperature stabilizer in oil well cements for well cementation, manufactured by the CNPC Engineering Technology R&D Company Limited.

The dispersant was an aldehyde-ketone polycondensate DRS-1S, a dispersant in oil well cements for well cementation, manufactured by the CNPC Engineering Technology R&D Company Limited.

The fluid loss additive was an acrylamide compound DRF-1S, a fluid loss additive in oil well cements for well cementation, manufactured by the CNPC Engineering Technology R&D Company Limited.

The retarder was an organic acid DRH-1L, a retarder in oil well cements for well cementation, manufactured by the CNPC Engineering Technology R&D Company Limited.

The defoamer was an organic ester DRX-1L, a defoamer in oil well cements for well cementation, manufactured by the CNPC Engineering Technology R&D Company Limited.

The experiments were conducted according to the China National Standard GB/T 19139-2012 "Testing method of well cements", in order to evaluate the general engineering properties (for example, density, fluidity, API water loss) of the cement slurry systems, and compressive strength and permeability before and after corrosion. The major experimental instruments included: 30-60 type Valen agitator; TG7370D pressurized autoclave, manufactured by Shenyang Taige Oil Equipment manufacturing Co., Ltd.; HH-420 constant temperature digital display water tank, manufactured by Changzhou Yineng Laboratory Instrument Plant; YAW-300B hydraulic pressure tester, manufactured by Jinan Xinshijin Testing Machine Co., Ltd.; CO₂ corrosion environment simulation system, produced by the CNPC Engineering Technology R&D Company Limited.

The fluidity was measured according to the China National Standard GB/T 19139-2012 "Testing method of well cements".

The API water loss amount was measured according to the China National Standard GB/T 19139-2012 "Testing method of well cements".

The cement stone corrosion was performed in the "CO₂-corrosive environmental simulation system" invented by the CNPC Engineering Technology R&D Company Limited, or the corrosion maintenance was performed in a device with pressure maintenance in a CO₂ gas/liquid environment.

The compressive strengths before and after erosion were measured according to the China National Standard GB/T 19139-2012 "Testing method of well cements".

Strength loss ratio: Strength loss ratio = (T2-T1)/T1, where T1 denotes the compressive strength of the cement stone before corrosion, T2 denotes the compressive strength of the cement stone after corrosion.

The permeability was measured according to the China National Standard GB/T 19139-2012 "Testing method of well cements".

### Preparation Example 1

A method for preparing the corrosion-resistant material specifically included the following steps:
(1) the activated carbon, nanosilica and nano-alumina were sufficiently and uniformly mixed with in a mass ratio of 1:0.05:0.05, where the activated carbon was commercially available, with 325 mesh; the nanosilica was commercially available, with the SiO₂ content of 99.5% and an average particle diameter of 30nm; the nano-alumina was commercially available, with an average particle diameter of 30nm and the Al₂O₃ content of 99.3%; and the three materials were uniformly mixed to obtain a mixture A;
(2) the diatomite and metakaolin were mixed uniformly in a mass ratio of 1:1 to obtain a mixture B; and
(3) the mixture A and the mixture B were uniformly mixed in a mass ratio of 1:2, and the corrosion-resistant material was prepared.

### Preparation Example 2

A method for preparing the corrosion-resistant material specifically included the following steps:
(1) the activated carbon, nanosilica and nano-alumina were sufficiently and uniformly mixed with in a mass ratio of 1:0.1:0.1, where the nanosilica was commercially available, with the SiO₂ content of 99.9% and an average particle diameter of 40nm; the nano-alumina was commercially available, with an average particle diameter of 20nm and the Al₂O₃ content of 99.9%; the three materials were uniformly mixed to obtain a mixture A;
(2) flash ash and coal gangue were uniformly mixed in a mass ratio of 2:1 to obtain a mixture B; and
(3) the mixture A and the mixture B were uniformly mixed in a mass ratio of 1:3, and the corrosion-resistant material was prepared.

### Preparation Example 3

A method for preparing the corrosion-resistant material specifically included the following steps:
(1) the activated carbon, nanosilica and nano-alumina were sufficiently and uniformly mixed in a mass ratio of 1:0.2:0.1, where the activated carbon was commercially available, with 325 mesh; the nanosilica was commercially available, with the SiO₂ content of 99.8% and an average particle diameter of 30nm; the nano-alumina was commercially available, with an average particle diameter of 30nm and the Al₂O₃ content of 99.5%; the three materials were uniformly mixed to obtain a mixture A;
(2) flash ash and pumice were uniformly mixed in a mass ratio of 3:1 to obtain a mixture B; and
(3) the mixture A and the mixture B were uniformly mixed in a mass ratio of 1:5, and the corrosion-resistant material was prepared.

### Preparation Comparative Example 1

The diatomite and the coal gangue were mixed and stirred uniformly at a mass ratio of 2:1, and the corrosion-resistant material was prepared.

### Preparation Comparative Example 2

(1) the nanosilica and nano-alumina were sufficiently and uniformly mixed in a mass ratio of 1:1, where the nanosilica was commercially available, with the SiO₂ content of 99.5% and an average particle diameter of 30nm; the nano-alumina was commercially available, with an average particle diameter of 30nm and the Al₂O₃ content of 99.3%; the two materials were uniformly mixed to obtain a mixture A;
(2) diatomite and metakaolin were uniformly mixed in a mass ratio of 1:1 to obtain a mixture B; and
(3) the mixture A and the mixture B were uniformly mixed in a mass ratio of 1:3, and the corrosion-resistant material was prepared.

### Example 1

The cement slurry was composed of the following components in parts by weight: 100 parts of the Grade G oil well cement, 3 parts of the corrosion-resistant material obtained from the Preparation Example 1, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Example 2

The cement slurry was composed of the following components in parts by weight: 100 parts of the Grade G oil well cement, 3 parts of the corrosion-resistant material obtained from the Preparation Example 2, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Example 3

Example 3 differed from Example 2 by adding different amounts of corrosion-resistant materials. The cement slurry was composed of the following components in parts by weight: 100 parts of the Grade G oil well cement, 5 parts of the corrosion-resistant material obtained from the Preparation Example 2, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Example 4

The cement slurry was composed of the following components in parts by weight: 100 parts of the Grade G oil well cement, 6 parts of the corrosion-resistant material obtained from the Preparation Example 2, 2 parts of the micro-silicon, 6 parts of the reinforcing material, 3 parts of the expansion toughening material, 1 part of the latex powder, 2 parts of the stabilizer, 2 parts of the dispersant, 2 parts of the fluid loss additive, 2 parts of the retarder, 0.2 part of the defoamer, and 56 parts of water. The cement slurry had a density of 1.88g/cm³, and the results were shown in Table 1.

### Example 5

The cement slurry was composed of the following components in parts by weight: 100 parts of the Grade G oil well cement, 2 parts of the corrosion-resistant material obtained from the Preparation Example 2, 5 parts of the micro-silicon, 3 parts of the reinforcing material, 6 parts of the expansion toughening material, 3 parts of the latex powder, 0.4 part of the stabilizer, 1 part of the dispersant, 5 parts of the fluid loss additive, 0.1 parts of the retarder, 0.2 part of the defoamer, and 48 parts of water. The cement slurry had a density of 1.88g/cm³, and the results were shown in Table 1.

### Example 6

Example 6 differed from Example 2 by adding different corrosion-resistant materials. The cement slurry was composed of the following components in parts by weight: 100 parts of the Grade G oil well cement, 3 parts of the corrosion-resistant material obtained from the Preparation Example 3, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Comparative Example 1

Comparative Example 1 differed from Example 2 by adding different corrosion-resistant materials. The cement slurry was composed of the following components in parts by weight: 100 parts of the Grade G oil well cement, 3 parts of the corrosion-resistant material obtained from the Comparative Preparation Example 1, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Comparative Example 2

Comparative Example 2 differed from Example 2 by adding different corrosion-resistant materials. The cement slurry was composed of the following components in parts by weight: 100 parts of the Grade G oil well cement, 3 parts of the corrosion-resistant material obtained from the Comparative Preparation Example 2, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

### Comparative Example 3

Comparative Example 3 differed from Example 2 in that corrosion-resistant material was not added. The cement slurry was composed of the following components in parts by weight: 100 parts of the Grade G oil well cement, 3 parts of the micro-silicon, 5 parts of the reinforcing material, 4 parts of the expansion toughening material, 2 parts of the latex powder, 1 part of the stabilizer, 1 part of the dispersant, 3 parts of the fluid loss additive, 0.5 part of the retarder, 0.2 part of the defoamer, and 53 parts of water. The cement slurry had a density of 1.88g/cm³, and the results were shown in Table 1.

**Table 1 Experimental results of Examples and Comparative Examples**

| Items | Example 1 | Example 2 | Example 3 | Example 4 | Example 5 |
|---|---|---|---|---|---|
| Density (g/cm³) | 1.88 | 1.88 | 1.88 | 1.88 | 1.88 |
| API filtrate loss (mL) | 34 | 32 | 28 | 26 | 26 |
| Fluidity (cm) | 22 | 22 | 21 | 21 | 21 |
| Maintenance test conditions | 80°C 20.7MPa | 80°C 20.7MPa | 80°C 20.7MPa | 130°C 20.7MPa | 40°C 20.7MPa |
| Compressive strength after 7d (MPa) | 32.6 | 31.3 | 30.4 | 35.6 | 26.8 |
| Permeability before corrosion (mD) | 0.031 | 0.034 | 0.022 | 0.031 | 0.042 |
| Corrosion test condition | 80°C 25MPa | 80°C 25MPa | 80°C 25MPa | 130°C 25MPa | 40°C 15MPa |
| Compressive strength after 60 days of corrosion (MPa) | 27.9 | 26.3 | 28.4 | 29.5 | 25.8 |
| Permeability after 60d of corrosion (mD) | 0.039 | 0.047 | 0.041 | 0.044 | 0.039 |

**Table 1 Experimental results of Examples and Comparative Examples (continued)**

| Items | Example 6 | Comparative Example 1 | Comparative Example 2 | Comparative Example 3 |
|---|---|---|---|---|
| Density (g/cm³) | 1.88 | 1.88 | 1.88 | 1.88 |
| API filtrate loss (mL) | 28 | 32 | 28 | 36 |
| Fluidity (cm) | 21 | 22 | 17 | 23 |
| Maintenance test conditions | 80°C 20.7MPa | 80°C 20.7MPa | 80°C 20.7MPa | 80°C 20.7MPa |
| Compressive strength after 7d (MPa) | 32.4 | 30.7 | 29.3 | 31.5 |
| Permeability before corrosion (mD) | 0.027 | 0.033 | 0.046 | 0.049 |
| Corrosion test condition | 80°C 25MPa | 80°C 25MPa | 80°C 25MPa | 80°C 25MPa |
| Compressive strength after 60d of corrosion (MPa) | 20.1 | 18.4 | 15.9 | 15.6 |
| Permeability after 60d of corrosion (mD) | 0.094 | 0.177 | 0.186 | 0.203 |

As shown in Table 1, the fluidity of all cement slurries in the Examples is greater than 20cm, and the API water loss is less than 50mL; thus, the requirements for well cementation construction are met. The corroded cement stones in all embodiments have a compressive strength greater than 20 MPa, a strength loss rate of less than 20%, and a permeability of less than 0.1 mD; these properties meet the well-cementation sealing requirements.

As demonstrated by the experimental data of Examples 1-3, the compressive strength of the cement slurry in Example 1 after 60 days of corrosion is decreased from 32.6MPa to 27.9MPa, the compressive strength of the corroded cement stone is larger than 20MPa, and the permeability is less than 0.05mD. The mechanical properties of the corroded cement stone are good and can meet the sealing requirements. In the ranges defined by the present disclosure, the adjustments regarding the proportions of ingredients in the corrosion-resistant material and the addition amount of the corrosion-resistant material do not adversely affect the density, fluidity, API water loss and the like of the cement slurry system. In addition, each of the corroded cement stones has the compressive strength larger than 20MPa and the permeability less than 0.05mD, thus the cement stone has desirable corrosion resistance.

As indicated by the experimental data of Examples 2, 4 and 5, after the temperature is changed, the amounts of different additives are adjusted as required, the obtained cement slurry system has good engineering performance. After maintenance under the corrosion condition, the cement slurry system has the compressive strength larger than 20MPa and the permeability less than 0.05mD, thus the corrosion resistance is good, that is, the adjustments are performed within the ranges of the addition amount of each material according to different temperatures, the use requirements under different temperatures can be met.

As illustrated by the data of Example 2 and Comparative Examples 1-2, the compressive strength of the corroded cement stones in Comparative Examples 1-2 is significantly reduced to less than 20MPa, and the permeability is obviously increased, or even greater than 0.1mD. And the fluidity of cement slurry in Comparative Example 2 is 17cm, and the fluidity shows a sign of deterioration.

The data of Comparative Example 4 indicates that if the corrosion-resistant material is not added into the cement slurry, the strength of cement stone before corrosion is 31.5 MPa, but after 60 days of corrosion, the compressive strength of cement stone is attenuationd to 15.6 MPa with a decreasing amplitude of 50.48%, and the permeability is sharply increased from 0.049 mD to 0.203 mD, thus the compressive strength is obviously attenuated, and the permeability is significantly increased.

To sum up, the applicable temperature of the cement slurry in the present disclosure is 30-150°C, the cement stones after corrosion have the compressive strength larger than 20MPa and the permeability less than 0.05mD, remarkably improving the CO₂ corrosion resistance of the cement stone, with no affection of other engineering performances of the cement slurry, thus the cement sheath can be effectively sealed for a long time under the CCUS corrosion working condition.

The above content describes the preferred embodiments of the present disclosure in detail, but the present disclosure is not limited thereto. A variety of simple modifications can be made regarding the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A corrosion-resistant material for a cement slurry, comprising a mixture A and a mixture B; wherein the mixture A comprises activated carbon, nanosilica, and nano-alumina; the mixture B comprises a component C and a component D; the component C is selected from diatomite and/or fly ash; and the component D is selected from the group consisting of metakaolin, pumice, and coal gangue.

2. The corrosion-resistant material according to claim 1, wherein a mass ratio of activated carbon to nanosilica to nano-alumina in the mixture A is 1:0.05-0.1:0.05-0.1;
and/or, a mass ratio of the component C to the component D is 1-2: 1;
and/or, a mass ratio of the mixture A to the mixture B is 1: 2-4.

3. A corrosion-resistant material according to claim 1 or 2, wherein the activated carbon has an average particle diameter of 40-60µm;
and/or, the nanosilica has a SiO₂ content of more than 99% and an average particle diameter of 30-40nm;
and/or, the nano-alumina has an Al₂O₃ content of more than 99% and an average particle diameter of 10-30nm;
and/or, the component C has an average particle diameter of 10-20µm;
and/or, the component D has an average particle diameter of 20-40µm.

4. A method for preparing a corrosion-resistant material for a cement slurry, comprising:
mixing activated carbon, nanosilica, and nano-alumina to obtain a mixture A;
mixing a component C and a component D to obtain a mixture B; wherein the component C is selected from diatomite and/or fly ash; and the component D is selected from the group consisting of metakaolin, pumice, and coal gangue; and
mixing the mixture A and the mixture B under the condition of a low stirring speed, followed by a high stirring speed to obtain the corrosion-resistant material;
preferably, the low stirring speed is 3,800-4,200 r/min, and the high stirring speed is 11,500-12,500 r/min.

5. The method for preparing according to claim 6, wherein a mass ratio of activated carbon, nanosilica, and nano-alumina in the mixture A is 1:(0.05-0.1): (0.05-0.1);
and/or, a mass ratio of the component C to the component D is 1-2: 1;
and/or, a mass ratio of the mixture A to the mixture B is 1: 2-4.

6. The method for preparing according to claim 4 or 5, wherein the activated carbon has an average particle diameter of 40-60µm;
and/or, the nanosilica has a SiO₂ content of more than 99% and an average particle diameter of 30-40nm;
and/or, the nano-alumina has an Al₂O₃ content of more than 99% and an average particle diameter of 10-30nm;
and/or, the component C has an average particle diameter of 10-20µm;
and/or, the component D has an average particle diameter of 20-40µm.

7. Use of the corrosion-resistant material according to any one of claims 1-3 or of the corrosion-resistant material prepared by the method according to any one of claims 4-6 in a cement slurry, preferably in a carbon dioxide corrosion-resistant cement slurry.

8. A carbon dioxide corrosion-resistant cement slurry, comprising following components in parts by weight: 100 parts of Grade G oil well cement, 2-6 parts of a corrosion-resistant material, 2-5 parts of micro-silicon, 3-6 parts of a reinforcing material, 3-5 parts of an expansion toughening material, 1-3 parts of latex powder, 0-2 parts of a stabilizer, 0.3-2 parts of a dispersant, 2-5 parts of a fluid loss additive, 0.1-2 parts of a retarder, 0.2-0.5 part of a defoamer, and 48-56 parts of water; wherein the corrosion-resistant material is the corrosion-resistant material according to any one of claims 1-3 or the corrosion-resistant material prepared by the method according to any one of claims 4-6.

9. The cement slurry according to claim 8, wherein the micro-silicon has a SiO₂ content of no less than 90%, an average particle diameter of 5-10µm, and a 45µm sieve residue of less than or equal to 5%.

10. The cement slurry according to claim 8 or claim 9, wherein the reinforcing material is selected from inorganic mineral powder material, preferably mineral powder DRB-1S;
and/or, the expansion toughening material is selected from rubber material, preferably rubber DRE-3S;
and/or, the latex powder is selected from polymer, preferably polymer DRT-1S;
and/or, the stabilizer is selected from attapulgite materials, preferably mineral powder DRK-2S.

11. The cement slurry according to any one of claims 8-10, wherein the dispersant is selected from polystyrene sulphonate compounds and/or polycondensates of formaldehyde and acetone;
and/or, the fluid loss additive is selected from polyacrylamide compounds;
and/or, the retarder is selected from acrylamide compounds;
and/or, the defoaming agent is selected from the group consisting of tributyl phosphate, polyoxypropylene glycerol, and polydimethylsiloxane.

12. A method for preparing a carbon dioxide corrosion-resistant cement slurry, comprising:
mixing a Grade G oil well cement with a corrosion-resistant material, micro-silicon, a reinforcing material, an expansion toughening material, latex powder, a stabilizer and a dispersant to obtain a dry mix; wherein the corrosion-resistant material is the corrosion-resistant material according to any one of claims 1-3 or the corrosion-resistant material prepared by the method according to any one of claims 4-6; and
mixing a fluid loss additive, a retarder, a defoamer, and water to obtain a wet mix;
mixing the dry mix with the wet mix to obtain a carbon dioxide corrosion-resistant cement slurry.

13. Use of the carbon dioxide corrosion-resistant cement slurry according to any one of claims 8-11 or of the carbon dioxide corrosion-resistant cement slurry prepared by the method according to claim 12 in oil and gas well cementation.

14. The use according to claim 13, wherein the carbon dioxide corrosion-resistant cement slurry has a use temperature of 30-150°C.
